# EUROPEAN PATENT APPLICATION

(11) **EP 4 176 720 A1**
(43) Date of publication of application: **10.05.2023**
(21) Application number: 21207321.7
(22) Date of filing: 09.11.2021
(51) Int. Cl.: A01N 25/00, A01N 43/16, A01N 49/00, A01P 11/00

(54) **CALCIFEROLS TO REDUCE ENVIRONMENTAL IMPACT OF RODENTICIDES**

(71) Applicant: Discovery Purchaser Corporation, Delaware, 19801 (US)
(72) Inventor: The designation of the inventor has not yet been filed
(74) Representative: Vossius & Partner Patentanwälte Rechtsanwälte mbB

(57) **Abstract**

The present invention relates to rodenticide baits and kits comprising anticoagulant rodenticides. The present invention further concerns methods of killing rodents using said baits and kits, as well as methods for reducing the environmental impact of anticoagulant rodenticides. In another aspect, the present invention provides a new use for calciferol

## Description

### FIELD OF THE INVENTION

The present invention relates to rodenticide baits and kits comprising anticoagulant rodenticides. The present invention further concerns methods of killing rodents using said baits and kits, as well as methods for reducing the environmental impact of anticoagulant rodenticides. In another aspect, the present invention provides a new use for calciferol.

### BACKGROUND OF THE INVENTION

Rodents are common pests that carry and spread a disease if not controlled. A number of products and methods exist to control rodent infestations, which largely revolve around traps and poison baits, the latter being commonly referred to as "rodenticides." Generally, rodenticides can be categorized as being "anticoagulant" rodenticides or "non-anticoagulant" rodenticides.

### Anticoagulant rodenticides

Anticoagulant rodenticides cause death from excessive bleeding by interfering with blood clotting mechanisms and have proven particularly effective in managing rodent infestations. In general, they inhibit one or more enzymes of the vitamin K cycle preventing gamma-carboxylation of blood clotting factors II, VII, IX and X.

Anticoagulant rodenticides are typically classified by generation, which currently typically includes a first and a second generation.

"First generation" anticoagulant rodenticides include diphacinone (2-(Diphenylacetyl)-1*H*-indene-1,3(2*H*)-dione), warfarin (4-hydroxy-3-(3-oxo-1-phenylbutyl)chromen-2-one), coumatetralyl (4-Hydroxy-3-(1,2,3,4-tetrahydro-1-naphthyl)coumarin), and chlorophacinone (2-[2-(4-chlorophenyl)-2-phenylacetyl]indene-1,3-dione). First generation anticoagulants proved to be very successful as a rodenticide when they were introduced in the 1950s, however resistance to warfarin and other first generation anticoagulants in rodents, in particular in rats, led to the need for the development of novel rodenticides, leading to the development of more toxic analogues of warfarin in the form of second generation anticoagulant rodenticides.

"Second generation" anticoagulant rodenticides include bromadiolone (3-[3-[4-(4-bromophenyl)phenyl]-3-hydroxy-1-phenylpropyl]-4-hydroxychromen-2-one), difenacoum (2-hydroxy-3-[3-(4phenylphenyl)-1,2,3,4-tetrahydronaphthalen-1-yl]chromen-4-one), brodifacoum (3-[3- [4-(4-bromophenyl)phenyl]-1,2,3,4-tetrahydronaphthalen-1-yl]-4-hydroxychromen-2-one), flocoumafen (4-hydroxy-3-[3-[4-[[4-(trifluoromethyl)phenyl]methoxy]phenyl]-1,2,3,4-tetrahydronaphthalen-1-yl]chromen-2-one), and difethialone (3-[3-[4-(4-bromophenyl)phenyl]-1,2,3,4-tetrahydronaphthalen-1-yl]-2-hydroxythiochromen-4-one).

Difenacoum and bromadiolone are sometimes called 'multi-feed' compounds because rodents usually require more than one feed for a lethal effect. Brodifacoum, flocoumafen, and typically also difethialone are called 'single feed' compounds because one feed is usually sufficient for lethality. Resistance now occurs among some strains of rats and mice to difenacoum and bromadiolone but no practical resistance has been observed in the three 'single-feed' compounds (RRAC Guidelines on Anticoagulant Rodenticide Resistance Management, 2016, second issue). The concentration of second generation anticoagulant rodenticides in rodenticide bait is typically about 50 mg/kg, but this can be reduced to 25 mg/kg. Below this level it is difficult to guarantee or expect that rodents in field treatment will receive a lethal dose of the rodenticide or that an infestation can be controlled, especially given the substantial variation in rodents' daily consumption.

Unlike first generation anticoagulant rodenticides, second generation anticoagulants are more potent and active after only one feeding. In addition, second generation anticoagulant rodenticides have a longer half-life compared to first generation anticoagulants (see e.g. Vandenbroucke et al., 2008, J. vet. Pharmacol. Therap. 31, 437-445). For example, the first generation anticoagulant rodenticide, coumatetralyl, was reported to have a plasma half-life of 0.52 days, while the second-generation anticoagulant rodenticide, brodifacoum, had a half-life in plasma of 91.7 days and in the liver of 307.4 days. While this pharmacokinetic profile is particularly suitable for providing an effective rodenticide, it results in a much greater environmental impact. Namely, the longer half-life and consequently longer tissue persistence has a significantly higher risk of primary and in particular secondary poisoning of non-target animals. Primary poisoning occurs when a non-target animal consumes bait put out for target rodents. Secondary poisoning occurs when scavenging or predatory animals consume poisoned animals (RRAC Guidelines on Anticoagulant Rodenticide Resistance Management, 2016, second issue).

The risk of secondary poisoning is highest when products containing these substances are applied to control large rat infestations around livestock farms, where predators, such as foxes, weasels, buzzards, red kites, and barn owls may be exposed to poisoned live or dead rodents, in particular rats, that have consumed toxic anticoagulant rodenticide (Endepols et al. 2016 Pest Manag Sci). Thus, there is a need to provide alternative rodenticides that are as effective as second generation anticoagulant rodenticides, but pose a lower risk to the environment, in particular to non-target species.

Damin-Pernik et al. (2017, Drug Metab Dispos 45:160-165) describe a "third-generation" anticoagulant rodenticides. The difenacoum composition reported in Damin-Pernik et al. is based on optimizing the stereochemistry of the second-generation anticoagulant rodenticide, difenacoum, in particular by enriching the proportion of the *trans-isomer,* which has a shorter half-life than the cis-isomer. This is described to reduce tissue persistency, thus avoiding secondary poisoning associated with difenacoum's use. However, there is no proof that such isomers are as effective in resistant rat strains as the trade product.

### Non-anticoagulant rodenticides

Aside from anticoagulant-based compositions, rodent infestation control also rely on "non-anticoagulant" rodenticide compositions. These include, among others, bromethalin, zinc phosphide, and calciferol (in particular cholecalciferol).

Bromethalin (N-methyl-2,4-dinitro-N(2,4,6-tribromophenyl)-6-(trifluoromethyl)benzamine) is a neurotoxic rodenticide that affects oxidative phosphorylation and increases cerebrospinal fluid pressure, which damages the central nervous system and can lead to respiratory distress, paralysis, and death.

Zinc phosphide is a rodenticide that when eaten, stomach acid causes it to release the toxic gas phosphine. Baits containing zinc phosphide are particularly dangerous to animals that cannot vomit, such as rats, mice, and rabbits. The toxic gas then crosses into the body's cells, and inhibits the cells energy production, resulting in apoptosis, in the heart, lungs, and liver. There is no antidote, and no effective treatment against these acute poisons.

Calciferol is a collective name for vitamin D analogues. Ergocalciferol (Vitamin D₂) and cholecalciferol (Vitamin D₃) are the two "activated" sterols of importance in nutrition and therapeutics. The action of calciferol is to raise blood calcium levels by stimulating the absorption of calcium from the intestine and mobilizing skeletal reserves. This takes many hours to build up to an effective level and the period of latency between the ingestion of calciferol and the development of hypercalcaemia has particular relevance to the effectiveness of the compound as a rodenticide. Advantages of using calciferol as a rodenticide is that it is effective against warfarin-resistant rodents and it has a relatively low risk of secondary poisoning and low toxicity to birds (RRAC Guidelines on Anticoagulant Rodenticide Resistance Management, 2016, second issue). A drawback of using calciferol in rodenticide bait, however, is the difficulty in coaxing rodents in the field to orally consume a lethal dose. This is largely due to the reported behavioral effects associated with oral consumption of calciferol-poisoned bait.

One of these behavioral effects is referred to in the art as a "stop feeding" effect, which describes the observation that rodents start reducing general food intake after 24 to 48 hours after calciferol intake (Meehan AP, 1984, Rats and mice, Rentokil Library, East Grinstead, UK). This effect is dose-dependent. Another behavioral effect is referred to in the art as "bait-shyness" or "conditioned taste aversion." This describes the learned effect to avoid calciferol-containing baits after previous consumption of said baits (Prescott, CV et al., 1992, Calciferols and bait shyness in the laboratory rat, 5th VPC, Univ. California, Davis). These behavioral effects make it particularly challenging to administer an effective lethal dose in the field or in choice experiments, where rodents can turn to alternative food sources.

The acute oral LD₅₀ of calciferol for rats and mice is generally considered to be 30-100 mg/kg (Meehan AP, 1984, Rats and mice, Rentokil Library, East Grinstead, UK) and it has been reported that the minimum concentration at which calciferol - either alone or combined with warfarin in rodenticide bait - is likely to give good results in the field against rats or mice is 0.1% (Greaves et al., 1974, J. Hyg., Camb. 73, 341). Calciferol is typically used as a rodenticide in baits in a concentration in the range of from 750 to 1000 mg/kg (Prescott, CV et al., 1992, Calciferols and bait shyness in the laboratory rat, 5th VPC, Univ. California, Davis), below which calciferol's killing efficacy is too invariable to effectively kill and control a rodent infestation.

Bait developers try to overcome the behavioral difficulties associated with administering calciferol-containing rodenticide baits by designing more attractive and palatable baits bases and pre-conditioning the rodents to consume those more attractive bait bases before switching to the rodenticide-containing analogue.

Endepols et al. (2016, Pest Manag Sci, doi 10.1002/ps.4235) describe a combination of coumatetralyl (a first-generation anticoagulant) and cholecalciferol (a non-anticoagulant rodenticide) as an effective, ecofriendly rodenticide. This combination is described to have a synergistic effect between the calciferol and the first generation anticoagulant rodenticide and be effective against the Y139C resistant strain of the Norway rat, which is known to be resistant to coumatetralyl, to bromadiolone, and to difenacoum. The synergistic effect is limited to rats and does not work in mice. Since both coumatetralyl and cholecalciferol present a relatively low risk of secondary poisoning, this combination is described to provide an alternative to second generation anticoagulants.

The Safety Data Sheet for Sorexa CD Mouse Bait (Product: VITD81004; July 2003; Manufacturer: Sorex Limited; St. Michael's Industrial Estate, Widnes, Cheshire, WA8 8TJ) describes a dual-action rodenticide bait comprising the components cholecalciferol (CAS No. 67-97-0) at 0.075% and difenacoum (CAS No. 56073-07-5) at 0.0025%.

Kocher D.K. and Navjot K. (2013, Int. J Res BioSciences; 2(1): 73-82) test different combinations of bromadiolone and cholecalciferol under laboratory conditions in a no-choice test of *Rattus rattus.* The authors describe that the lowest concentration of 0.001% bromadiolone and 0.01% cholecalciferol resulted in 100 percent mortality within 3 to 5 days, attributing this to a potential synergistic effect of calciferols and anticoagulants. The authors describe that reducing bromadiolone concentration in the bait could minimize the primary and secondary hazards.

The inventors of the present invention found that such a synergistic effect could not be shown or expected between calciferol and second generation anticoagulant rodenticides, especially for the most potent "single-feed" second generation anticoagulant rodenticides, where the substances are not metabolized and are also fully effective against all warfarin-resistant lines on their own.

Despite advances in rodenticide compositions, there is still a need for improved means of controlling rodent infestations. In particular, there is a need for rodent control means that are effective against the target animals and exhibit a lower primary and secondary toxicity of non-target animals.

### SUMMARY OF THE INVENTION

Against the aforementioned background, it is an object of the present invention to provide an improved rodenticide composition, in particular an improved rodenticide bait that is highly effective and has a reduced environmental impact, in particular a reduced risk of secondary toxicity. It also is an object of the present invention to provide a method of killing rodents that has a high degree of primary effectiveness but a lower environmental impact, in particular a reduced risk of secondary toxicity.

These objects are achieved by the provision of rodenticide baits according to claim 1, the kit of claim 8, the methods of claims 9 and 11, and the use according to claim 12.

In particular, the invention provides a rodenticide bait comprising one or more anticoagulant rodenticides and a sublethal concentration of one or more calciferols. By using calciferol at a sublethal concentration, calciferol is not used for its rodenticide effects, but it's non-lethal behavioral effects.

Unlike the prior art, which found such behavioral effects to be a disadvantageous symptom or detriment to rodent control efforts, the inventors of the present invention innovatively embraced this behavioral side effect and repurposed it as a means to inhibit rodents from over-consuming anticoagulant rodenticides well past intake of lethal dose, thus also preventing unnecessary accumulation and the resulting ecological impact when poisoned animals are then consumed by predators and scavengers.

The research underlying the invention even more surprisingly found that when including calciferol in a sublethal amount in an already effective amount of the single-feed second generation anticoagulant, brodifacoum, rodents drastically reduced their intake of the composition within the first 24 hours of the field experiment. This early reduction of intake occurred again on subsequent days, in total resulting in an almost 60 percent reduction in overall bait consumption compared to a parallel experiment where a similar rat infestation was treated with the analogous bait containing the same concentration of the anticoagulant rodenticide but without cholecalciferol. Surprisingly, despite the dramatically reduced bait consumption on all days tested, including on Days 1 and 2, the combination of the anticoagulant rodenticide and a sublethal concentration of calciferol showed the same high level of effectiveness against a rat infestation as the same bait containing brodifacoum but no cholecalciferol.

Thus, the present invention provides a new means for both effectively controlling rodent infestations and for reducing the risk of secondary poisoning associated with toxic anticoagulant rodenticides, in particular associated with second generation anticoagulant rodenticides. The prior art has typically addressed the problem of secondary toxicity by reducing the concentration of or finding alternatives to the most toxic anticoagulant rodenticides. These tactics, however, are not always suitable or feasible alternatives. The present invention, in contrast to the prior art, provides a means that enables a safer application of highly toxic anticoagulant rodenticides by targeting the rodents' individual behavior and in particular limiting unnecessarily high overdoses in the wild, without the need to alter the anticoagulant, its concentration, or even its method of application, since these effects are seen even where there is a surplus of bait available. The invention further provides a safety net for rodenticide control efforts where anticoagulant resistance is only detected later in treatment, after a time period where the resistant rodents have already consumed large amounts of the anticoagulant rodenticides. The invention therefore provides a safer yet still highly effective and reliable means of controlling rodent infestations.

In addition, the invention results in a dramatic overall reduction in bait consumption, which provides the additional financial and ecological advantages of reduced farming, production, and transport needs associated with the manufacture of bait. Although cholecalciferol itself is relatively expensive, its use in low quantities combined with the surprisingly large and immediate reduction in bait consumption limits this drawback.

Thus, the invention provides a new and innovative means for controlling rodent infestations in a more environmentally friendly manner, in particular in a manner that reduces the risk of secondary toxicity associated with anticoagulant rodenticides.

### DETAILED DESCRIPTION OF ILLUSTRATIVE EMBODIMENTS

### The rodenticide bait

In one aspect, the invention provides a rodenticide bait, characterized in that said bait comprises one or more anticoagulant rodenticides and a sublethal concentration of one or more calciferols.

The term calciferol is the collective name for vitamin D analogues. Vitamin D2 (ergocalciferol) and Vitamin D3 (cholecalciferol) are the two "activated" sterols. Ergocalciferol is manufactured by exposing ergosterol, a sterol found in fungi, to ultraviolet light. Cholecalciferol is the natural form of Vitamin D, and is produced by UV irradiation of 7-dehydrocholesterol, a sterol present in animal fats. Preferably, the one or more calciferols comprised in the bait of the invention is selected from the group consisting of ergocalciferol, cholecalciferol, derivatives thereof, and/or a combination thereof. Calciferols are known to promote the absorption of calcium and phosphate from the gut and an overdose promotes intestinal absorption of calcium and reabsorption of bone minerals, which can lead to hypercalcaemia, osteomalacia and metastatic calcification of the blood vessels, which are the symptoms that underlie the rodenticide properties of calciferols. Derivatives of calciferols used in the bait according to the invention must maintain the aforementioned effects or show functionally equivalent effects thereto. This can be determined, e.g. by measuring calciferol-induced effect in a rodent sample and comparing it with the same parameter measured after a calciferol derivative is administered to a comparable rodent sample. Effects are considered to be maintained or functionally equivalent if there are no statistically significant differences between the two conditions. This will depend on the reliability of the parameter used, however typically effects are considered maintained if the calciferol derivative-induced effect differs from the calciferol-induced effect by 10% or less, based on the calciferol-induced effect. The skilled person can use any known means of determining an effect, such as determining blood or plasma calcium levels, bone mineral density, and/or bone mineral content, all of which are known in the art.

In a particularly preferred embodiment, the one or more calciferols is ergocalciferol and/or cholecalciferol, most preferably cholecalciferol. Typically, the rodenticide bait of the invention comprises cholecalciferol.

The rodenticide bait of the invention comprises a sublethal concentration of calciferol. Sublethal is defined herein as producing no mortality exceeding 10% in *ad libitum* feeding. A sublethal concentration may also be defined to be a concentration in which, when provided as the only potential rodenticide in a rodenticide bait, is not expected to be effective in killing 90% or more of the target rodents. Whether a particular concentration is sublethal or lethal is determined in the absence of other potential rodenticides, in order to avoid potential synergistic effects between the different agents. The concentration of calciferol in bait can be labelled in mg/kg, ppm, or weight-percent, where 1 mg/kg is equivalent to 1 ppm and 0.0001 wt.-%, based on the total weight of the bait.

A lethal concentration of calciferol in rodenticide baits is typically considered to be between 750 to 1000 mg/kg. Baits comprising calciferol concentrations below this level are not reliable in reliably killing 90% of the target rodents treated and can thus be classified as sublethal. Thus, in one embodiment, the rodenticide bait comprises less than 750 mg/kg of calciferol. In another embodiment, the rodenticide bait comprises from 20 to 700 mg/kg, from 20 to 650 mg/kg, from 20 to 600 mg/kg, from 20 to 550 mg/kg, or from 20 to 500 mg/kg of calciferol. In a preferred embodiment, the rodenticide bait of the invention comprises from 20 to 500 mg/kg of calciferol; preferably from 20 to 200 mg/kg or from 25 to 100 mg/kg calciferol; more preferably from 50 to 150 mg/kg calciferol; most preferably from 50 mg/kg to 100 mg/kg calciferol. The rodenticide bait of the invention may also comprise from 25 to 75 mg/kg or from 50 to 75 mg/kg of calciferol. In case more than one calciferol is comprised in the bait of the invention, the concentration ranges apply to the total concentration of all calciferols present. It will be understood that the concentration ranges apply to all types of calciferols, in particular to ergocalciferol and cholecalciferol, wherein preferably the calciferol is cholecalciferol.

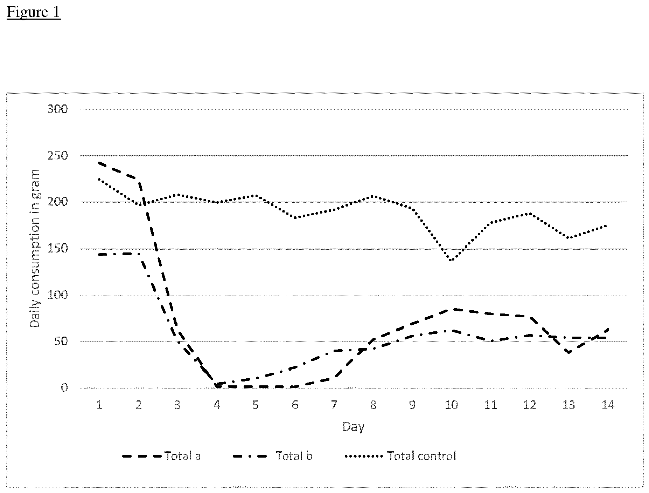

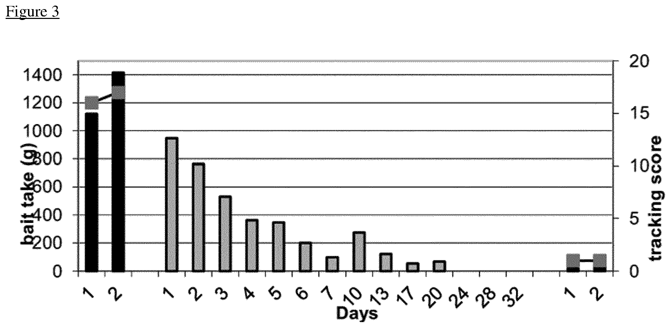

The inventors found that adding 100 mg/kg of calciferol to standard lab chew induced a significant stop feeding effect within two days, resulting in a significant reduction in overall consumption throughout the test period (see Example 1 and Figure 1). Surprisingly, field experiments employing rodenticide bait comprising 100 mg/kg of cholecalciferol and 25 mg/kg of brodifacoum additionally resulted in a reduced bait intake already on Days 1 and 2 (see Example 2 and Figure 3).

The one or more anticoagulant rodenticides comprised in the rodenticide bait of the invention can be selected from the group consisting of first generation anticoagulant rodenticides, second generation anticoagulant rodenticides, third generation anticoagulant rodenticides, and a combination thereof.

First generation anticoagulant rodenticides according to the invention include diphacinone (2-(Diphenylacetyl)-1*H*-indene-1,3(2H)-dione), warfarin (4-hydroxy-3-(3-oxo-1-phenylbutyl)chromen-2-one), coumatetralyl (4-Hydroxy-3-(1,2,3,4-tetrahydro-1-naphthyl)coumarin), and chlorophacinone (2-[2-(4-chlorophenyl)-2-phenylacetyllindene-1,3-dione). Second generation anticoagulant rodenticides according to the invention include bromadiolone (3-[3-[4-(4-bromophenyl)phenyl]-3-hydroxy-1-phenylpropyl]-4-hydroxychromen-2-one), difenacoum (2-hydroxy-3-[3-(4phenylphenyl)-1,2,3,4-tetrahydronaphthalen-1-yl]chromen-4-one), brodifacoum (3-[3- [4-(4-bromophenyl)phenyl]-1,2,3,4-tetrahydronaphthalen-1-yl]-4-hydroxychromen-2-one), flocoumafen (4-hydroxy-3-[3-[4-[[4-(trifluoromethyl)phenyl]methoxy]phenyl]-1,2,3,4-tetrahydronaphthalen-1-yl]chromen-2-one), and difethialone (3-[3-[4-(4-bromophenyl)phenyl]-1,2,3,4-tetrahydronaphthalen-1-yl]-2-hydroxythiochromen-4-one). Third generation anticoagulant rodenticides according to the invention include variations of second generation anticoagulants in which either the *cis-* or the trans-isomer is enriched compared to the "conventional" second generation anticoagulants.

The use of an anticoagulant rodenticide in the rodenticide bait of the invention has the advantage that toxic effects of the anticoagulant rodenticide are delayed, which allows the rodent enough time to consume a lethal dose of the rodenticide. This delay also allows calciferol enough time to induce a stop feeding effect and/or bait-shyness effect. Typically these effects set in after about two days. The inventors found that while the lag time between rodenticide consumption and toxic effects was highly beneficial for ensuring the anticoagulant's lethality, the lag time also allowed the rodents to continue consuming the poisoned bait to a level past that of the lethal dose. This was found to result in an unnecessary rodenticide consumption and accumulation, leading to much higher levels of the toxic substances in the poisoned rodent's body than is necessary to effectively manage a rodent infestation. The at-times-multiple lethal dose consumed by single rodents has exponential effects when those poisoned rodents are then consumed by non-target animals.

While the rodenticide bait of the invention is suitable for reducing the secondary toxicity potential of all types of anticoagulant rodenticides, it is particularly suitable for reducing the secondary toxicity associated with anticoagulant rodenticides having a long tissue half-life and/or a relatively low lethal dose 50 (LD₅₀). A long tissue half-life is defined herein to be an elimination half-life of 12 hours or more, meaning that it takes 12 hours for a certain amount of rodenticide to reduce in concentration in said tissue by half. The half-life can be measured from any body tissue, for example blood, plasma, serum, liver, kidneys, muscle, or abdominal fat. Preferably the half-life is determined from the plasma or the liver, most preferably from the liver. In one embodiment, at least one of the one or more anticoagulants used in the rodenticide bait of the invention has a plasma elimination half-life in a mouse, at a dose of half the LD₅₀ value, of 10 or more, 15 or more, 20 or more, 25 or more, 30 or more, 35 or more, 40 or more, 50 or more, 60 or more, 70 or more, 80 or more, 90 or more, or 100 or more days. In one embodiment, at least one of the one or more anticoagulants used in the rodenticide bait of the invention has a plasma elimination half-life in a rat of 12 or more, 15 or more, 20 or more, 25 or more, 30 or more, 35 or more, 40 or more, 50 or more, 60 or more, 70 or more, 80 or more, 90 or more, or 100 or more hours. In a preferred embodiment, at least one of the one or more anticoagulants used in the rodenticide bait of the invention has a liver elimination half-life in mice and/or rats of 10 or more, 15 or more, 20 or more, 25 or more, 30 or more, 35 or more, 40 or more, 45 or more, 50 or more, 55 or more, 60 or more, 65 or more, 70 or more, 75 or more, 80 or more, 85 or more, 90 or more, 95 or more, or 100 or more days; preferably of 80 or more, 85 or more, 90 or more, 95 or more, or 100 or more days; most preferably of 90 or more, 95 or more, or 100 or more days. In a particularly preferred embodiment, the anticoagulant used in the rodenticide bait has a liver half-life in rats of 100 or more, 120 or more, 140 or more, 160 or more, 180 or more, or 200 or more days. The longer it takes to eliminate the anticoagulant rodenticide, the more crucial it is to avoid consumption over the lethal dose, and likewise the more advantageous the invention is for said embodiments. However, since residues of toxic anticoagulants will already accumulate in the digestive tract upon consumption, the invention is also advantageous for reducing the environmental impact of all types of anticoagulant-comprising rodenticide baits.

The invention is particularly suitable reducing the secondary toxicity potential of anticoagulants with a relatively low lethal dose 50 (LD₅₀). Methods of determining the LD₅₀ of an anticoagulant are well known in the art and any of the common methods can be used. LD₅₀ is a statistically determined dose that is expected to be lethal in 50% of the animals it is administered to. In one embodiment, at least one of the one or more anticoagulants used in the rodenticide bait of the invention has an LD₅₀ in mice (in mg/kg body weight) of 5.0 or less, 4.5 or less, 4.0 or less, 3.5 or less, 3.0 or less, 2.5 or less, 2.0 or less, 1.5 or less, or 1.0 or less; preferably of (in mg/kg bw) 2.0 or less, 1.5 or less, 1.0 or less, 0.8 or less, 0.7 or less, 0.6 or less, 0.5 or less, or 0.4 or less; most preferably of (in mg/kg bw) 1.0 or less.

In some embodiments, at least one of the one or more anticoagulant rodenticides comprised in the composition of the invention has one of the above-described LD₅₀ values and one of the above-described half-life values. Said LD₅₀ and half-life embodiments are combined without reservation. In a preferred embodiment, the rodenticide composition comprises at least one anticoagulant rodenticide that has an LD₅₀ of 2.0 mg/kg bw or less in mice and/or rats, and a liver half-life in mice and/or rats of 80 or more days. In a particularly preferred embodiment, the rodenticide composition comprises at least one anticoagulant rodenticide that has an LD₅₀ of 1.0 mg/kg bw or less in mice and/or rats, and a liver half-life in mice and/or rats of 100 or more days.

The problem of consuming the anticoagulant rodenticide past the lethal dose was found to be more prevalent in the case of second generation anticoagulants, where fewer feedings are typically necessary to administer a lethal dose of the rodenticide than for first generation anticoagulant rodenticides, and thus a longer "consumption-past-the-lethal-dose" occurs. For rodenticide baits comprising second generation anticoagulants, rodents' continued consumption of the toxic rodenticides well after they have consumed a lethal dose of the rodenticide further exacerbates the already high toxicity of the compositions and their relatively long half-lives. This makes the use of second generation anticoagulants in the rodenticide baits of the invention particularly advantageous, as these anticoagulants benefit the most from the presence of a sublethal concentration of calciferol.

Thus, in one embodiment, at least one of the one or more anticoagulant rodenticides comprised in the composition of the invention is a second generation anticoagulant rodenticide, in particular one selected from the group of brodifacoum, flocoumafen, difenacoum, bromadiolone, and difethialone, or a combination thereof. This embodiment has the additional advantage that it is effective in killing strains of warfarin-resistant rodents, in particular the *Rattus norvegicus* strain Y139S (see EP3255988 B1 Table 2). In another embodiment, at least one of the one or more anticoagulant rodenticides comprised in the composition of the invention is a second generation anticoagulant rodenticide selected from the group of brodifacoum, flocoumafen, difenacoum, or difethialone, or a combination thereof. This embodiment has the additional advantage that it is effective in killing strains of rodents, e.g. *Rattus norvegicus* strains L120Q Berkshire, L128Q and Y139F, that show resistance to first generation anticoagulants as well as to the second generation anticoagulant, bromadiolone. In a further embodiment, at least one of the one or more anticoagulant rodenticides comprised in the composition of the invention is a second generation anticoagulant rodenticide selected from the group of brodifacoum, flocoumafen, or difethialone, or a combination thereof. This embodiment has the particular advantage that it is effective in killing even the particularly difficult L120Q and Y139C strains of *Rattus norvegicus,* which show resistance even to the second generation anticoagulants bromadiolone and difenacoum.

In a particularly preferred embodiment, at least one of the one or more anticoagulant rodenticides comprised in the composition of the invention is brodifacoum or flocoumafen, in particular brodifacoum. These second generation anticoagulants show the lowest LD₅₀ and have the highest tissue persistence in rodents and non-target animals, which means that they create the highest risk of secondary poisoning and thus benefit the most from the sublethal calciferol comprised in the rodenticide bait of the invention.

Typically the rodenticide bait comprises one anticoagulant rodenticide. One anticoagulant rodenticide may comprise a mixture of different, e.g. two or more, stereoisomers of the same base molecule. For example, the second generation anticoagulants are mixtures of diastereomers *(cis-* and *trans*-isomers), however the mixture of the *cis-* and *trans*-isomers (e.g. of flocoumafen) is considered to be one anticoagulant rodenticide. Two mixtures, each of which comprise different proportions of the same isomers (e.g. a mixture of 20% cis-isomer and 80% trans-isomer of flocoumafen versus a mixture of 80% cis-isomer and 20% trans-isomer of flocoumafen) are considered to be two separate anticoagulant rodenticides.

In some embodiments, the rodenticide bait comprises more than one anticoagulant rodenticide. In particular, the rodenticide bait of the invention may comprise two or more, three or more, or four or more anticoagulant rodenticides, in particular two, three, four, or five anticoagulant rodenticides.

While the invention is most effective in mitigating the effects of overdosing in connection with second generation anticoagulant rodenticides, it is not limited to these types of anticoagulant rodenticides. The rodenticide bait of the invention in particular also reduces unnecessary accumulation of other anticoagulant rodenticides, e.g. first or third generation anticoagulant rodenticides, beyond their necessary lethal-dose intake. First and third generation anticoagulants, despite their shorter half-life compared to second generation anticoagulant rodenticides, still are known to accumulate past the necessary lethal dose and still have half-lives that allow the rodenticide to remain in the body tissue for days. Compositions comprising these anticoagulant rodenticides thus present a higher risk of secondary poisoning of non-target animals than is necessary. As such, the rodenticide bait of the invention comprising first and/or third generation anticoagulants likewise reduce the risk of rodents overdosing on these anticoagulant rodenticides, providing a more eco-friendly rodenticide bait with a lower risk of secondary toxicity of non-target animals compared to the same composition without a sublethal dose of calciferol.

In one embodiment of the invention, the one or more anticoagulant rodenticides comprised in the composition of the invention is a first generation anticoagulant rodenticide, in particular one selected from the group consisting of diphacinone, warfarin, coumatetralyl, and chlorophacinone, or a combination thereof.

In another embodiment of the invention, the one or more anticoagulant rodenticides comprised in the composition of the invention is a third generation anticoagulant rodenticide. A third generation anticoagulant is defined herein to be a second generation anticoagulant (all of which currently known are diasteromers) that has been modified in the ratio of *cis-* to *trans*-isomers, resulting in a different ratio than known to be comprised in the respective second generation anticoagulant conventionally used. Typically, the third generation anticoagulant is enriched in the isomer with the shorter half-life (for details see Damin-Pernik et al., 2017, Drug Metab Dispos 45:160-165). As shown in Damin-Pernik et al. at Table 1, even the anticoagulant isomers with the shorter half-life still have relatively long plasma half-lives. For example, brodifacoum's *cis-* and trans-isomer are described to have a liver half-life in Sprague-Dawley rats after oral administration of 3.0 mg/kg of the substances of 120.82 hours and 68.73 hours, respectively. The respective isomers of second generation anticoagulants that have the shortest half-life in Sprague-Dawley rats after oral administration of 3.0 mg/kg of the respective substances are described to be: the trans-isomer of difenacoum with a half-life of 24.18 hours, the *trans*-isomer of brodifacoum with a half-life of 68.73 hours, the cis-isomer of flocoumafen with a half-life of 76.73 hours, the cis-isomer of bromadiolone with a half-life of 26.89 hours, and the trans-isomer of difenacoum with a half-life of 52.93 hours. In one embodiment of the invention, the anticoagulant rodenticide comprises a third generation anticoagulant, wherein the third generation anticoagulant is a second generation anticoagulant that has been modified to comprise a different percentage of the isomer with the shorter half-life than comprised in the second generation anticoagulant. In one embodiment, the second generation anticoagulant has been modified to comprise an increase in the isomer with the shorter half-life.

Even according to the liver half-life values in rats reported in Damin-Pernik et al. 2017, which are substantially shorter than those reported elsewhere (see e.g. Horak, Katherine; Fisher, Penny M.; and Hopkins, Brian M., 2018 "Pharmacokinetics of Anticoagulant Rodenticides in Target and Nontarget Organisms". USDA National Wildlife Research Center - Staff Publications. 2091: pp. 87-108), it still would take at least a full one to three days, depending on the anticoagulant, before even half of the toxic substance is removed from the poisoned rodent's body. Thus, the third generation anticoagulants still pose a substantial risk to non-target animals and benefit from the present invention. In one embodiment of the invention, at least one of the one or more anticoagulant rodenticides comprised in the rodenticide bait of the invention is a third generation anticoagulant rodenticide. This embodiment provides an effective rodenticide with a substantially reduced risk of secondary toxicity from the combined effect of lower overall intake presented by the invention and of faster decay of the consumed rodenticide offered by the third generation anticoagulant.

It has previously been reported that calciferol and the first generation anticoagulant, coumatetralyl, have a synergistic effect, and employing concentrations of both components in sublethal doses (i.e. sublethal if present without the other agent) resulted in a high level of effectiveness of the composition. The present invention does not rely on such synergistic effects. The present invention in particular is advantageous independent of the presence or absence of a potential synergistic effect between calciferol and an anticoagulant rodenticide resulting in increased efficacy in killing target rodents. In a preferred embodiment, the one or more anticoagulant rodenticide is present in the rodenticide bait of the invention in an effective concentration, i.e. in a concentration that is effective as a rodenticide even in the absence of calciferol. An effective concentration is defined herein to be a concentration that is expected to be lethal to 90% or more of non-resistant target rodents to be treated. This effective concentration ignores any synergistic effects, in particular those with calciferol. Therefore, the effective concentration of the one or more anticoagulant rodenticides is the concentration determined for said rodenticide(s) in the absence of calciferol. While regulatory approval sets the lower limit to be 90% efficacy, in some embodiments of the invention, the effective concentration can be a concentration that is expected to be lethal to 90% or more, 91% or more, 92% or more, 93% or more, 94% or more, 95% or more, 96% or more, 97% or more, 98% or more, 99% or more, or 100% of non-resistant target rodents to be treated, preferably 95% or more, 98% or more, or 99% or more. Non-resistant as used herein means having no practical resistance to the anticoagulant rodenticide being referred to. Resistance as used herein means "practical resistance" according to the definition of Greaves in: A.P. Buckle and R.H. Smith. 1994. Rodent Pests and their Control, CAB International, Wallingford, Oxfordshire. The actual concentration will depend on the anticoagulant rodenticide, and typical effective concentrations are well known in the art and can be used herein. The concentration of anticoagulant rodenticides in bait can be defined in mg/kg, ppm, or weight-percent, where 1 mg/kg is equivalent to 1 ppm and 0.0001 wt.-%, based on the total weight of the bait.

In one embodiment the bait of the invention comprises one or more first generation anticoagulant rodenticides, wherein the one or more first generation anticoagulant rodenticides are preferably present at a concentration of from 20 to 800 mg/kg, more preferably from 100 to 800 mg/kg or from 250 to 800 mg/kg, and particularly preferably from 400 to 800 mg/kg or from 450 to 800 mg/kg. In a preferred embodiment, the bait of the invention comprises coumatetralyl at a concentration of from 400 to 800 mg/kg, preferably from 450 to 800 mg/kg.

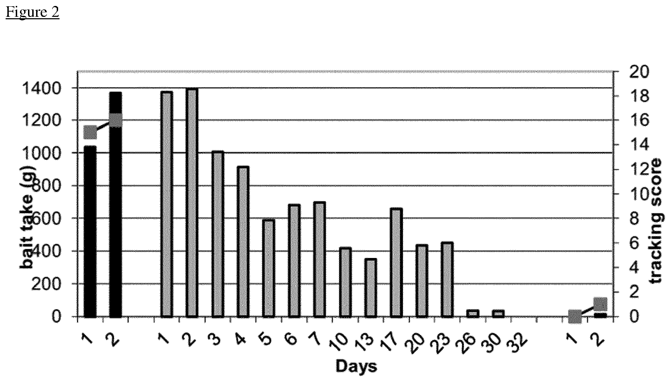

In another embodiment, the bait of the invention comprises one or more second generation anticoagulant rodenticides. High doses of second generation anticoagulants are generally considered to be 0.005% (equivalent to 50 ppm or 50 mg/kg) or more. Low doses of second generation anticoagulants are generally considered to be below 0.003% (equivalent to 30 ppm or 30 mg/kg). High field-test efficacy against non-resistant house mice populations has been reported for both high-dose (50 ppm) and low-dose (25 ppm) baits based on brodifacoum (Frankova et al. (2019) Scientific Reports, 9:16779). Similarly, the inventors found that the rodenticide bait comprising 25 mg/kg of brodifacoum (without calciferol) was 99% effective in a field test against a rat infestation at a farm (see Table 1, condition "BR" and Figure 2).

In one embodiment, the rodenticide bait of the invention comprises one or more second generation anticoagulant rodenticides at a concentration of from 10 to 100 mg/kg, preferably from 10 to 75 mg/kg; more preferably from 20 to 75 mg/kg or from 25 to 75 mg/kg. In a particularly preferred embodiment, the rodenticide bait of the invention comprises brodifacoum, difethialone, or flocoumafen, or a combination thereof, in a concentration of from 10 to 75 mg/kg, from 20 to 75 mg/kg or from 25 to 75 mg/kg, most preferably at a concentration of from 25 to 50 mg/kg, including 25, 26, 27, 28, 29, 30, 31, 32, 33, 34, 35, 36, 37, 38, 39, 40, 41, 42, 43, 44, 45, 46, 47, 48, 49, and 50 mg/kg, in particular at a concentration of 25 mg/kg or 50 mg/kg.

In a further embodiment, the rodenticide bait of the invention comprises a third generation anticoagulant rodenticide. The same concentration embodiments disclosed for the second generation anticoagulant rodenticides apply to the respective third generation anticoagulant rodenticides.

If more than one first generation anticoagulant rodenticide is comprised in the bait of the invention, the concentration ranges disclosed herein for first generation anticoagulant rodenticides refer to the total concentration of all first generation anticoagulant rodenticides comprised in the bait. The same is true with respect to embodiments comprising more than one second generation anticoagulant and embodiments comprising more than one third generation anticoagulant. Embodiments for which the bait of the invention comprises both second and third generation anticoagulant rodenticides, the concentration refers to the total concentration of second and third generation anticoagulant rodenticides together, not separated into generations, unless stated otherwise.

The invention explicitly foresees the combination of the above-mentioned concentrations of calciferol and above-mentioned concentrations of the one or more anticoagulant rodenticides, without reservation. In a preferred embodiment, the rodenticide bait of the invention comprises from 50 to 200 mg/kg or from 50 to 100 mg/kg of calciferol and from 20 to 75 mg/kg of a second generation anticoagulant, wherein the second generation anticoagulant is preferably selected from the group of brodifacoum, difethialone, flocoumafen, or a combination thereof. Most preferably the rodenticide bait of the invention comprises from 50 to 100 mg/kg of calciferol and from 25 to 50 mg/kg of a second generation anticoagulant, wherein the second generation anticoagulant is preferably selected from the group of brodifacoum, difethialone, flocoumafen, or a combination thereof.

The rodenticide bait of the invention can be in any suitable form, i.e. in a form suitable for physical contact and/or preferably for direkt oral consumption or otherwise ingestion. Suitable forms for rodenticide bait are well known in the prior art. These include but are not limited to block, paste, loose grain, gel, soft chew, granule, or pelleted forms, or a combination thereof. Preferably the rodenticide bait is in (wax) block, paste, or loose grain form. The rodenticide bait may be, for example in wax block form. The bait of the invention may also be in the form of loose grains, preferably wherein the grains comprise oats, wheat, rice, corn, seed, or a combination thereof. The inventors found that the rodenticide bait is particularly effective when in the form of paste bait, waxblock, granules or pellets.

In one embodiment, the bait of the invention is in the form of soft or paste mixtures based on vegetable fats and flours, or gels based on oil-based or aqueous formulations. In a preferred embodiment, the bait of the invention is in the form of a paste comprising or consisting of cereals or flours and vegetable fat. Such pastes in 10 g to 200 g packs are, for example, well-suited forms of the rodenticide bait of the invention.

Other forms of bait of the invention include liquid or gels and so-called contact poison forms such as powders and foams. Contact poison forms are not consumed as food or drink sources directly, but are applied in such a way that they adhere to the rodents' fur, whiskers, or other body part and the poison is orally ingested during grooming. The skilled person is familiar with contact poisons and understands that these may require a higher concentration of the active ingredients to be effective.

The rodenticide bait of the invention may comprise one or more additives. In one embodiment the rodenticide bait of the invention comprises one or more additives preferably selected from the group of one or more bittering agents, flavoring agents, insecticides, fungicides, dyes, or preservatives, or a combination thereof. In a preferred embodiment, the bait of the invention comprises one or more bittering agents, such as denatonium benzoate ("BITREX"). This has the effect of deterring accidental consumption by e.g. children. Additives may include one or more insecticides, fungicides, dyes, or preservatives, to prevent bait fouling and/or preventing off-target consumption.

The bait of the invention is particularly well suited to use in methods of killing rodents, in particular in methods of controlling a rodent infestation.

The bait of the invention is, however, also suitable to be used in a method to reduce the environmental impact of anticoagulant rodenticides, in particular of second and/or third generation anticoagulant rodenticides.

### Kit according to the invention

In a further aspect, the invention provides a kit comprising the rodenticide bait of the invention as described above and a means for applying said rodenticide bait.

All embodiments and advantages described for the rodenticide bait apply to the kit aspect of the invention.

Applying is defined as making the bait available to allow a target rodent or target rodent population to come into physical contact with, and/or preferably to orally consume said bait. Applying is used synonymously with "baiting". Oral consumption includes eating, drinking, and any other means that results in the rodenticide bait being directed into the mouth and then subsequently to the stomach of the rodent. Oral consumption can be direct (e.g. by consuming the bait as food or drink) or indirect (e.g. by consuming the bait off of another body part while grooming), the latter being typical for contact poisoning bait forms.

Applying the bait includes baiting, delivering, housing, deploying, depositing, setting out, scattering, distributing, lining, placing, hiding, burying, burrowing, plantation-baiting, hanging, stashing, and any other suitable way of presenting the bait to rodents so that they are able to either directly consume it (i.e. eat, drink, lick the bait) or otherwise physically come into contact with it. The bait is applied in, to, or at one or more suitable locations. The skilled person determines suitable locations for bait application on a case-by-case basis depending on the landscape and particular conditions of the case. It is well within the skilled person's knowledge and skillset to properly determine suitable application means and application locations in order to allow a target rodent or target rodent population to orally consume the bait comprised in the kit of the invention.

When the bait is in a contact poison form, such as a foam or powder, the means for applying said rodenticide bait typically comprises a suitable application device, such as a pressurized spray can, caulking gun, or the like.

When the bait is in the form of a gel, the means for applying said rodenticide preferably comprises an application device, such as gel applicator, for example a pump-based application means, such as a caulking or pump gun. Said application means are particularly suitable to plantation and/or burrow baiting.

When the bait is in a form suitable for direct oral consumption, such as a (wax) block, paste, loose grain, gel, soft chew, or pelleted form, the means for applying the bait typically comprises a housing means, such as a bait station. Bait stations are well known in the art and provide a secure and tamper-resistant housing to deliver rodenticide baits to rodents without the risk of accidental poisoning of children or pets, such as dogs. The application means can also comprise bait protection means effected using local materials such as tiles, boards, pipes or the like, which have the function of preventing non-target animals from consuming the poisoned bait.

### Method of killing rodents according to the invention

In a further aspect, the invention provides a method of killing rodents comprising applying the rodenticide bait of the previous aspect of the invention.

All embodiments and advantages described for the rodenticide bait and kit aspects of the invention apply to this method aspect of the invention.

The method of killing rodents may comprise applying the rodenticide bait to allow one or more target rodents to orally consume or physically contact said bait. In one embodiment, the method of killing rodents is a method of killing certain target rodents. In some embodiments, the target rodent is a commensal rodent, preferably the target rodent is of the genus *Microtus, Arvicola, Rattus* und *Mus.* The method of the invention is preferably a method of killing rats (*Rattus*) and/or mice (*Mus*); more preferably rats selected from the species *Rattus norvegicus* and/or *Rattus rattus,* and/or mice of the species *Mus musculus*/*domesticus.*

In one embodiment, the method is a method of killing rodents that are non-resistant to at least one or more of the anticoagulant rodenticides comprised in the rodenticide bait. Preferably, the target rodents of the method are not resistant to any of the one or more anticoagulant rodenticides comprised in the rodenticide bait used in the method of the invention. Resistance as used herein means "practical resistance" according to the definition of Greaves in: A.P. Buckle and R.H. Smith. 1994. Rodent Pests and their Control, CAB International, Wallingford, Oxfordshire.

The method of this aspect of the invention may further comprise one, two, or all of the following optional steps:
- determining the level of resistance to one or more anticoagulant rodenticides, preferably to warfarin, coumatetralyl, and/or bromadiolone, present in a population of rodents to be treated;
- pre-baiting with non-poisoned bait;
- applying the rodenticide bait for a treatment period in a manner that allows the target rodent or population of rodents to orally consume and/or physically contact the applied rodenticide bait;
- measuring the amount of bait consumed at suitable intervals during the treatment period, preferably every 1, 2, 3, or 4 days; preferably every day during the initial 5, 6, or 7 treatment days and then every 2, 3, or 4 days for the remaining treatment period.

In a preferred embodiment, the method of the invention comprises a pre-baiting period, in which non-poisoned bait, preferably housed in a bait station, is applied prior to the treatment period, or if applicable prior to the pre-treatment census period. In some embodiments, the pre-baiting period comprises the pre-treatment census period described below. In other embodiments, the pre-baiting period and pre-treatment census periods are separate. Pre-baiting with non-poisoned bait allows rodents to acclimate to certain bait, bait stations, and in particular certain treatment locations and conditions. This aims to improve bait take during the first days of the treatment period, in order to more readily ensure effective amounts of the bait (i.e. a sublethal dose of calciferol to effect a stop feeding effect and an effective, i.e. lethal, dose of the anticoagulant rodenticide to effect killing) are consumed.

It is well within the skilled person's ability to determine a suitable time period for applying the rodenticide bait, i.e. to determine a suitable treatment period, as well as suitable treatment conditions, e.g. intermittency and bait replenishment. This will depend on the particularities of the case, e.g. the extent of the rodent infestation, climate conditions, landscape considerations, etc. The method of the invention is most suitable for use when the bait is applied in a manner that allows the rodents to feed multiple times and preferably over two or more continuous days, e.g. in manners such as surplus baiting. However, the method of the invention is also suitable for acute and/or periodic treatment periods, e.g. in manners such as treatments of four or less days and/or in pulsed baiting techniques. In one embodiment, the method of the invention comprises applying the bait in a surplus or a pulsed manner. The treatment period when the bait is applied in a pulsed manner is preferably 1, 2, 3, or 4 days for each pulse, with a preferable number of pulses of 2, 3, 4, or 5. Preferably, bait is applied in a surplus manner. The treatment period when the bait is applied in a surplus manner is preferably from 10 to 40 days, including 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, and 40 days. In a particularly preferred embodiment, the rodenticide bait is applied for 25 or more days, 30 or more days, 35 or more days, or 40 or more days, preferably from 25 to 40 days. The treatment period should be prematurely discontinued if significant rodenticide resistance is detected to avoid propogating further resistance. The treatment period should also be prematurely stopped if full control has been achieved.

The method of this aspect of the invention may further comprise the step of determining the level of efficacy of the rodenticide bait in killing members of the target rodent population. Efficacy of treatment can be determined by any suitable means known in the art. Typical means comprise qualitative mortality estimation measures, such as a reduction in and/or elimination of, for example, bait take, rodent-induced damage, rodent droppings, rodent sightings, and the like. Preferably, determining the level of killing efficacy of the rodenticide bait is quantitative, preferably comprising one or more of the following optional steps:
- applying a non-rodenticide bait prior to and following the treatment period with the rodenticide-containing bait;
- measuring the amount of non-rodenticide bait taken during the period prior to and following the treatment period;
- comparing the amount of non-rodenticide bait taken during the period prior to and the amount following the treatment period, wherein preferably the percent reduction in non-rodenticide bait consumption determines the level of treatment efficacy.

Other suitable means for quantitatively determining a rodenticide's killing efficacy include, for example, tracking and comparing footsteps pre and post treatment, and/or tagging rodents and surveying the number of comparing the number of living tagged rodents in a representative sample of the rodent population pre and post treatment.

When quantitative measures are taken, the period prior to and following the treatment period are referred to as the "pre-treatment census" and "post-treatment census" periods, respectively. Preferably, measurements taken in the pre and post-treatment periods each comprise measuring the average or cumulative amount of a certain parameter taken over two, three or four days.

An at least 90% reduction in non-rodenticide bait consumed, an at least 90% reduction in footstep count (i.e. tracking census), and/or an at least 90% mortality rate represent an acceptable level of efficacy of the method of the invention in killing rodents. Preferably, the method of killing rodents according to the invention results in an efficacy of field treatment (i.e. of killing target rodents in the wild) of 90% or more, 91% or more, 92% or more, 93% or more, 94% or more, 95% or more, 96% or more, 97% or more, 98% or more, or 99% or more; more preferably of 95% or more, 96% or more, 97% or more; most preferably of 98% or more, or 99% or more, and ideally 100%.

### Method for reducing the environmental impact of one or more anticoagulant rodenticides

In a further aspect, the invention provides a method for reducing the environmental impact of one or more anticoagulant rodenticides, wherein the method comprises providing the rodenticide bait of the previous aspect of the invention.

Providing the rodenticide bait comprises combining the bait components together in order to provide the rodenticide bait in a suitable form. Any suitable means of combining known in the art can be used. The method of this aspect of the invention may further comprise the step of applying the rodenticide bait, in particular in order to treat (i.e. attempt to effectively kill and/or control) a rodent infestation.

All embodiments disclosed in the context of the rodenticide bait of the invention, the kit of the invention, and/or the method of killing rodents of the invention apply in the context of the method for reducing the environmental impact of one or more anticoagulant rodenticides according to the invention.

The method of this aspect of the invention is also advantageous when applied to rodents or a rodent population where resistance to one or more anticoagulant rodenticides comprised in the rodenticide bait is not known or could not be definitively determined before commencing treatment. In one embodiment, the method comprises applying the bait to a target rodent or target rodent population with an unknown or a known resistance to one or more of the anticoagulant rodenticides comprised in the bait used in the method. In this embodiment, the rodenticide bait applied will not be effective in killing the target rodents, however in contrast to comparable treatment scenarios, where the resistant rodents would have continued to consume the bait as though it were non-poisoned food, the method of this aspect of the invention still results in the resistant rodents reducing their consumption of the poisoned bait. This results in less anticoagulant rodenticide intake per rodent, less accumulation per rodent, and thus a significantly reduced risk of secondary toxicity when such rodents are consumed by non-target animals that do not show the same resistance to the rodenticide present in the resistant rodent's tissues. The method also reduces overall bait needs.

The method for reducing the environmental impact is preferably a method for reducing the environmental impact of an anticoagulant rodenticide in that it is a method for reducing the risk or potential of secondary toxicity associated with anticoagulant rodenticides. It is also a method for reducing target rodents over-consuming the anticoagulant, i.e. for reducing the risk of target rodents continuing to consume the anticoagulant past consumption of what is expected to be the lethal dose in non-resistant rodents.

### Use of calciferol to reduce the environmental impact of anticoagulant rodenticides

In a further aspect, the invention provides the use of one or more calciferols to reduce the environmental impact of one or more anticoagulant rodenticides. The use is characterized in that the one or more calciferols is used in, meaning present or comprised in, a rodenticide bait comprising the one or more anticoagulant rodenticides. In particular, the one or more calciferols is present in the rodenticide bait in a sublethal concentration. In a preferred embodiment, the one or more anticoagulant rodenticides comprised in the rodenticide bait is present in an effective concentration, meaning lethal even without calciferol, as described for the previous aspects of the invention.

In this way, calciferol is used as a means to allow the anticoagulant rodenticide to have its rodenticide, meaning lethal, effect, and simultaneously as a means to limit overconsumption of the toxic anticoagulant rodenticide. In one embodiment, the one or more calciferols and/or the one or more anticoagulant rodenticides are used and present in a manner that results in the rodenticide bait or kit of the previous aspects of the invention.

All embodiments and advantages disclosed in any of the previous aspects of the invention apply here to the use aspect of the invention. The use may thus further comprise any embodiment of any of the other aspects of the invention.

The inventors surprisingly found that by providing calciferol in a sublethal concentration together with an anticoagulant rodenticide present in an already effective amount, the resulting rodenticide bait was highly effective at killing the target rodent and the rodents' total consumption of the bait was dramatically reduced over the treatment period (see Example 2). Surprisingly, the inventors also found that the composition of the invention led to a reduction in bait consumption even on the first two days of treatment with the composition of the invention (see Figure 3), i.e. even earlier than expected. There was no corresponding reduction in bait consumption on the initial two treatment days when using the comparator rodenticide bait containing the anticoagulant rodenticide bait without calciferol.

Both the overall reduction of bait consumption during treatment, as well as the additional reduction in consumption on Days 1 and 2 as a result of the invention provide significant improvements over the rodenticide baits and rodenticide bait-based methods of the prior art, most of which address the problems of effectively controlling rodent infestations while reducing the environmental impact and secondary toxicity associated with anticoagulant rodenticides by either reducing the concentration of the toxic substance in baits or by substituting at least a portion of the most effective substances with less persistent alternatives. The various aspects of the invention provide improved means to effectively control rodent infestations that are reliable and substantially safer to non-target animals, and do not require any additional bait access restrictions or a reduced concentration of the anticoagulant rodenticide in the bait.

The above-described aspects of the invention will be further described in the following examples and figures. These are strictly illustrative of particularly preferred embodiments of the invention. The invention should not be construed, however, to be limited to such embodiments.

### EXAMPLES

### Example 1: Lab test of stop feeding effect

A lab trial was set up to test the stop-feeding effect induced by calciferol-containing bait in the absence of an anticoagulant rodenticide. Three groups (Group control, Group a, and Group b) of ten rats (*Rattus norvegicus*) each were subjected to the experiment. The control group and Group a consisted of male rats; Group b consisted of female rats. The groups were kept in three connected pens (20 cm x 60 cm) with shelter, saw-dust, water and feed *ad libitum* under standard laboratory conditions. The rats acclimatized in the test setup for ten days, with standard lab chew *ad libitum.*

The test-bait formulation was a paste-bait, based on vegetable fat and cereal flour, and contained cholecalciferol at 100 mg/kg. During the choice feeding test, the rats of both treatment groups (a and b) received the cholecalciferol-containing bait and the challenge diet (standard rat chew; Hoveler, Germany) *ad libitum.* The control group received the same bait as the treatment groups but without cholecalciferol, and the challenge diet. Consumption of bait and challenge diet was recorded in all groups daily for 14 days. The daily bait consumption results are depicted in Figure 1.

Both control and treatment groups showed good acceptance of the bait on Day 1 and continued to consume it at almost equal level on Day 2. All groups preferred the bait over the challenge diet. After seven days, Group a consumed 481 g of bait and 62 g of standard lab diet, Group b 322 g of bait and 93 g of standard lab diet, and the control group 1389 g of bait vs. 79 g of standard lab diet. The stop feed effect was obvious on Day 3, when treatment Groups a and b consumed 62 g and 50 g of cholecalciferol bait, respectively, whereas the control group remained at 208 g of non-cholecalciferol bait consumption (Fig. 1). Both treatment groups (a and b) reduced their total daily consumption of bait to almost 0 g by Day 4, and then slowly resumed bait consumption by Day 7.

This experiment shows that bait containing a sublethal concentration of cholecalciferol is both palatable to rats and induces a strong stop feeding effect starting within ca. 48 hours.

### Example 2: Field test

A field study at two conventional livestock farms in Germany with verified rat infestations was conducted according to standard protocol (ECHA European Chemicals Agency, Guidance on the Biocidal Products Regulation, Vol. II Efficacy - Assessment and Evaluation (Parts B+C), Version 3.0, April 2018). Bait stations (Bell rat bait box; Bell Laboratories, Inc., Windsor, WI, USA) comprising either bait containing 25 mg/kg of brodifacoum (experimental paste bait as in the lab study of Example 1 above; "BR"; Farm 1) or bait containing a combination of 25 mg/kg of brodifacoum and 100 mg/kg cholecalciferol (experimental paste bait as in the lab study of Example 1 above "BRCC"; Farm 2) were positioned at strategic locations throughout the respective farm and the total daily consumption of the bait put out was measured and recorded on each of days 1 through 7, and then again on days 10, 13, 17, 20, and on days 23, 26, 30, and 32 (Farm 1) or on days 24, 28, and 32 (for Farm 2). Additionally, a 2-day census of un-poisoned rolled oats intake was conducted directly prior to and directly following the 32-day test.

These daily consumption values measure the success of controlling an infestation in the field when comparing the censuses conducted before and after control measures. The ratio of pre-baiting census to post-baiting census is a well-recognized measure of the success of treatment. The results of the trial are described in Table 1. In order to compare bait-consumption between study-sites, the relation of total bait consumption during the treatment on each site was put into relation to the 24 hours pre-treatment census, which is a reliable indicator of the infestation size.

**Table 1. Summary of field trial data on two study sites treated with brodifacoum (25 mg/kg) and brodifacoum (25 mg/kg) + cholecalciferol (100 mg/kg), respectively. "BR": Brodifacoum, "CC": Cholecalciferol.**

| Farm fD (a.i.) | Pre-treatment census (last day g/24h) | Control success (%), Feeding | Radio-tagged survivors/Total | N rats found dead | Total bait consumption (g) | Relation of total bait consumption/pre-treatment census |
|---|---|---|---|---|---|---|
| #1 (BR) | 1,368 | 99 | 1/14 | 38 | 9,032 | 6.6 |
| #2 (BRCC) | 1,416 | 98 | 2/15 | 26 | 3,768 | 2.7 |

As can be seen in Table 1 (first row) and Figure 2, controlling the rat infestation with bait containing brodifacoum at 25 mg/kg resulted in a 99% control success of the rat infestation on Farm 1. The relation of total bait consumption during the treatment period to the total bait consumption on Day 2 of the pre-treatment census was calculated to be 6.6. This gives a normalized estimate of the total bait consumption per rodent over the treatment period.

In contrast, as can be seen in Table 1 (second row) and Figure 3, controlling the rat infestation with bait containing the combination of brodifacoum at 25 mg/kg and cholecalciferol at 100 mg/kg resulted in a similarly high (98%) control success rate of the rat infestation on Farm 2. Surprisingly, this very high success rate was achieved with a ratio of total bait consumption to the pre-treatment census being only 2.7. This represents a 59.1% reduction in normalized bait consumption in rats treated according to the invention compared to those treated with the control bait containing only brodifacoum.

Surprisingly, whereas the rats feeding on the brodifacoum-containing bait in Farm 1 only began reducing bait intake after 2 days of consumption, the rats feeding on the combination bait of the invention in Farm 2 already began reducing bait consumption on Days 1 and 2, and this progressed throughout the treatment period. Thus, by combining brodifacoum with a sublethal dose of cholecalciferol, the inventors surprisingly found that rats still consume a lethal dose of brodifacoum, but their intake is curtailed much quicker than without cholecalciferol. The high mortality despite the dramatic reduction in bait take also indicates that the extra 40% brodifacoum consumed by the rodents on Farm 1 was unnecessary for killing effectiveness and posed an unnecessary threat of secondary poisoning.

Thus, the examples demonstrate that the bait, methods, and use of the invention result in substantially less unnecessary anticoagulant rodenticide consumption and thus also accumulation, resulting in a significantly lower potential for secondary poisoning, all the while still providing extremely high efficacy. They also result in less bait and overall feed needs, further reducing the environmental impact of the effective, but toxic, anticoagulant rodenticide contained in the bait.

### BRIEF DESCRIPTION OF THE DRAWINGS

Figure 1 depicts the daily consumption of bait (grams) in the laboratory study of Experiment 1, where three groups of rats (n=10 each) were given a choice between standard lab diet, and bait with or without cholecalciferol (100 mg/kg). Group Control (dotted line; male rats) was provided with standard lab diet and bait without cholecalciferol. Group a (dashed line; male rats) and Group b (dashed and dotted line; female rats) were offered a choice of standard lab diet and bait containing 100 mg/kg cholecalciferol.
Figure 2 depicts the bait take and tracking activities during the course of treatment on the trial Farm 1 (black bars: census period, gray bars: treatment period with brodifacoum, square blocks: tracking activities, data: cumulative values of periods between checks of 1 to 4 days).
Figure 3 depicts bait take and tracking activities during the course of treatment on the trial Farm 2 (black bars: census period, gray bars: treatment period with bait containing 25 mg/kg brodifacoum and 100 mg/kg cholecalciferol, square blocks: tracking activities, data: cumulative values of periods between checks of 1 to 4 days).

## Claims

1. A rodenticide bait, **characterized in that** said bait comprises one or more anticoagulant rodenticides and a sublethal concentration of one or more calciferols.

2. The rodenticide bait according to claim 1, wherein the one or more anticoagulant rodenticides is present in a concentration that would be effective against a target rodent without the sublethal concentration of calciferol.

3. The rodenticide bait according to claims 1 or 2, wherein the one or more anticoagulant rodenticides comprises a second generation anticoagulant rodenticide; preferably selected from the group consisting of difenacoum, brodifacoum, bromadiolone, flocoumafen, and difethialone, and/or a combination thereof; more preferably selected from the group consisting of brodifacoum, difethialone, and flocoumafen, or a combination thereof; most preferably selected from brodifacoum and/or flocoumafen.

4. The rodenticide bait according to any of the preceding claims, wherein the one or more calciferols is selected from the group consisting of ergocalciferol, cholecalciferol, derivatives thereof, and/or a combination thereof; preferably wherein the one or more calciferols is ergocalciferol and/or cholecalciferol; most preferably wherein the one or more calciferols is cholecalciferol.

5. The rodenticide bait according to any of the preceding claims, wherein the bait is in block, paste, loose grain, gel, soft chew, granule, and/or pelleted form; wherein preferably the bait is in block or paste form.

6. The rodenticide bait according to any of the preceding claims, wherein the bait comprises from 20 to 500 mg/kg of calciferol; preferably from 20 to 200 mg/kg calciferol; more preferably from 50 to 150 mg/kg calciferol; most preferably from 50 to 100 mg/kg calciferol.

7. The rodenticide bait of any one of claims 3 to 6, wherein the bait comprises from 10 to 100 mg/kg of the second-generation anticoagulant rodenticide; preferably from 10 to 75 mg/kg; more preferably from 20 to 75 mg/kg or from 25 to 50 mg/kg.

8. A kit comprising the rodenticide bait of any of the preceding claims and a means for applying said rodenticide bait.

9. A method of killing rodents comprising applying the rodenticide bait of any one of claims 1 to 7.

10. The method of claim 9, wherein the method is a method of killing commensal rodents; preferably rats and/or mice; more preferably rats selected from the group of *Rattus novegicus* and *Rattus rattus,* and/or mice of the species *Mus musculus.*

11. A method for reducing the environmental impact of one or more anticoagulant rodenticides, wherein the method comprises providing the rodenticide bait of any of claims 1 to 7.

12. Use of one or more calciferols to reduce the environmental impact of one or more anticoagulant rodenticides, **characterized in that** the one or more calciferols is comprised in a sublethal concentration in a rodenticide bait comprising the one or more anticoagulant rodenticides, preferably wherein the rodenticide bait is the rodenticide bait of any one of claims 1 to 7.

13. The use according to claim 12, wherein the environmental impact means the risk of secondary toxicity associated with the one or more anticoagulant rodenticides.
